(19) Europäisches Patentamt
European Patent Office
Office européen des brevets

(11) EP 3 183 378 B1

(12) **EUROPÄISCHE PATENTSCHRIFT**

(45) Veröffentlichungstag und Bekanntmachung des Hinweises auf die Patenterteilung:
**20.06.2018 Patentblatt 2018/25**

(21) Anmeldenummer: **15753349.8**

(22) Anmeldetag: **14.08.2015**

(51) Int Cl.:
*C23G 1/08* *(2006.01)*      *C23C 8/24* *(2006.01)*
*C23C 8/26* *(2006.01)*      *C23C 8/30* *(2006.01)*
*C23C 22/50* *(2006.01)*     *C25F 3/24* *(2006.01)*
*F27B 5/10* *(2006.01)*      *F27B 5/04* *(2006.01)*
*F27D 1/00* *(2006.01)*      *C21D 9/00* *(2006.01)*

(86) Internationale Anmeldenummer:
**PCT/EP2015/068805**

(87) Internationale Veröffentlichungsnummer:
**WO 2016/026795 (25.02.2016 Gazette 2016/08)**

(54) **VERFAHREN ZUR HERSTELLUNG EINER RETORTE FÜR EINEN NITRIEROFEN SOWIE RETORTE**

METHOD FOR PRODUCING A RETORT FOR A NITRIDING FURNACE AND RETORT

PROCÉDÉ DE PRODUCTION D'UNE CORNUE D'UN FOUR DE NITRURATION ET CORNUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.08.2014 DE 102014111779**

(43) Veröffentlichungstag der Anmeldung:
**28.06.2017 Patentblatt 2017/26**

(73) Patentinhaber: **IVA Schmetz GmbH**
**58708 Menden (DE)**

(72) Erfinder:
• **LANKES, Heinrich-Peter**
**41366 Schwalmtal (DE)**
• **HAASE, Peter**
**46419 Isselburg (DE)**
• **MILLER, Dirk**
**46395 Bocholt (DE)**

(74) Vertreter: **Harlacher, Mechthild**
**Harlacher Patentanwaltskanzlei**
**Kupferdreher Straße 282**
**45257 Essen (DE)**

(56) Entgegenhaltungen:
**DE-U1- 29 615 312      US-A- 3 764 304**
**US-A1- 2009 309 277**

• **WENSCHHOF D E: "CONTROLLING CORROSION OF FURNACE MUFFLES", INDUSTRIAL HEATING, NATIONAL INDUSTRIAL PUBLISHING CO., PITTSBURGH, US, Bd. 42, Nr. 8, 1. August 1975 (1975-08-01) , Seiten 10-17, XP009187303, ISSN: 0019-8374**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Herstellung einer Retorte für einen Nitrierofen, in dem metallische Werkstücke in einer vorbestimmten Atmosphäre wärmebehandelt werden, wobei die Retorte aus einem nichtrostenden Stahl gefertigt ist. Ferner umfasst die Erfindung eine Retorte für einen Nitrierofen. Schließlich beinhaltet die Erfindung einen Nitrierofen.

Metallische Werkstücken können auf vielfältige Art und Weise in einer vorbestimmten Atmosphäre wärmebehandelt werden. Ein allgemein bekanntes Verfahren ist das Nitrieren von Werkstücken aus Stahl. Dabei handelt es sich um ein Verfahren zur Oberflächenhärtung von Stahl, wobei Stickstoff aus einer stickstoffhaltigen Atmosphäre in der Oberfläche der Stahlbauteile angereichert wird. Nitrieren ist ein Verfahren zum Randschichthärten von Stählen. Das Nitrocarburieren ist eine Kombination von Nitrierung und Aufkohlung.

Nitrier- und Nitrocarburierprozesse werden im evakuierbaren Retorten von Nitrieröfen durchgeführt. Die Retorten bestehen aus nichtrostendem Stahl bzw. aus Edelstahl. Für Nitrier- und Nitrocarburierprozesse zwischen 500°C und 580°C werden gasförmige Medien verwendet und zwar hauptsächlich Stickstoff ($N_2$), Kohlendioxid ($CO_2$), Wasserstoff bzw. $H_2$, Endogas, Kohlenwasserstoffe ($C_xH_y$) und Ammoniak ($NH_3$). Als Stickstoffspender muss Ammoniak im Prozess vorhanden sein.

Zum Einbringen von Stickstoff in die Oberfläche von Stahlbauteilen bzw. Werkstücken aus Stahl muss der Stickstoff in atomarer Form vorliegen. Als Molekül ist der Stickstoff für den Prozess aufgrund der hohen Stabilität der Bindung nicht mehr verwendbar.

Die Erzeugung von atomarem Stickstoff erfolgt unter den gegebenen Temperatur- und Druckbedingungen im Prozess durch die Zugabe von gasförmigem Ammoniak.

Das Ammoniak verhält sich gemäß folgender Reaktion:

$$NH_3 \rightarrow [N] + 3/2\ H_2$$

bzw.

$$2\ NH3 \rightarrow N_2 + 3\ H2$$

wobei nur im ersteren Fall atomarer Stickstoff, also [N], für den Diffusionstransport in das Stahlbauteil zur Verfügung steht. Der Ammoniak spaltet sich dabei teilweise an der Oberfläche der Stahlbauteile bzw. Werkstücke, der dabei entstehende atomare Stickstoff wird im Werkstück eingelagert und bildet eine Härteschicht. Der beim Nitrieren frei werdende Wasserstoff tritt zusammen mit dem nicht gespaltenen Ammoniak aus dem Ofen aus und wird in der Regel entsorgt. Ist die unvermeidbare Rekombination zu $N_2$ bereits vollständig erfolgt, ist der Nitrierprozess beendet.

Das zugeführte Ammoniak soll bevorzugt direkt am Stahlbauteil dissoziieren, um dort eine ausreichende Menge an atomarem Stickstoff, also ein hohes Nitrierpotential, anzubieten. Eine Quantifizierung dieses Nitrierpotentials ermöglicht die sogenannte Nitrierkennzahl $K_N$. Diese ist definiert als

$$K_N = \frac{p_{NH_3}}{p_{H_2}^{1,5}}$$

wobei p der Partialdruck ist. Die Dissoziationsreaktion wird neben den Temperatur- und Druckbedingungen auch katalytisch beeinflusst. Diese katalytisch beeinflusste Dissoziation des Ammoniaks ist unerwünscht, findet aber prinzipiell an allen metallischen und aktiven Oberflächen innerhalb des Reaktionsraumes statt. In Retortenofenanlagen sind dies hauptsächlich die Innenflächen der Retorte, aber auch die Oberfläche von Tragvorrichtungen für die Werkstücke. Für die Retorten wird in der Regel der Edelstahl 1.4841 (X15CrNiSi25 - 21) oder Edelstahl 1.4828 verwendet. Durch den hohen Nickelanteil der Komponenten dieses Edelstahls ist eine ausgeprägte Neigung zur vorzeitigen Spaltung des Ammoniaks gegeben. Aus diesem Grund muss zur Einstellung eines bestimmten Nitrierpotentials eine vergleichsweise hohe Menge an Ammoniak eingespeist werden. Darüber hinaus stickt dieser Werkstoff durch den Nitrierprozess ebenfalls unvermeidbar auf, was eine unerwünschte Erhöhung der Oberflächenrauhigkeit und Nachteile in Bezug auf die Lebensdauer mit sich bringt. Ein Nitierofen mit einer Edelstahlretorte wird in der DE 296 15 312 U1 offenbart.

Die Aufgabe der Erfindung besteht demgemäß darin, ein Verfahren zur Herstellung einer Retorte zu entwickeln, um die vorgenannten Nachteile zu vermeiden, insbesondere die Aufstickung beim Nitrierprozess zu vermeiden. Ferner besteht die Aufgabe der Erfindung darin, eine verbesserte Retorte, die insbesondere einen hohen Widerstand gegen Aufstickung aufweist und einen Nitrierofen mit einer verbesserten Retorte zur Verfügung zu stellen.

Gemäß der Erfindung wird die Aufgabe durch ein Verfahren nach Anspruch 1 gelöst. Zumindest die im Betriebszustand des Nitrierofens mit der vorbestimmten Atmosphäre in Kontakt kommenden Oberflächen der Retorte werden mittels eines Beizmittels gebeizt. Mit der vorbestimmten Atmosphäre kommt insbesondere die Innenfläche bzw. Innenwand der Retorte in Kontakt. Bei der vorbestimmten Atmosphäre handelt es sich insbesondere um eine stickstoffhaltige Atmosphäre.

Der Erfindung liegt die Erkenntnis zugrunde, dass die unerwünschten Reaktionen minimiert werden können, wenn die metallische Oberflächen, die im Betriebszustand des Nitrierofens mit der vorbestimmten Atmosphäre in Kontakt kommen, insbesondere die Oberflächen im Inneren der Retorte eine möglichst hohe Passivität aufweisen. Die mittels eines Beizmittels behandelten Oberflächen der Retorte weisen nur noch eine geringe katalytische Aktivität auf. Dadurch wird der Aufbau eines hohen Nitrierpotentials während des Nitrierens in der Retorte mit geringerer Ammoniakmenge möglich. Vorzugsweise umfasst das Beizmittel Salpetersäure und Flusssäure, insbesondere ein Gemisch aus Salpetersäure und Flusssäure.

Vorzugsweise werden die Oberflächen nach dem Beizen mittels eines Elektrolyten in einem galvanischen Bad poliert. Dies führt zu einer Verringerung der Oberflächenrauhigkeit, d. h. in Summe zu einer geringen Gesamtoberfläche. Damit wird die Adsorption von Ammoniak an der Oberfläche als Vorstufe zur Dissoziation verringert. Vorteilhaft ist auch der höhere Widerstand gegen Korrosion. Dadurch verlängert sich die Gesamtlebensdauer der Retorte. Bei den Oberflächen die elektropoliert werden, handelt es sich insbesondere um die Innenflächen der Retorte. Nach der Erfindung umfasst das Elektrolyt Phosphorsäure und Schwefelsäure. Vorzugsweise erfolgt das Elektropolieren in einem galvanischen Bad bestehend aus Phosphorsäure und Schwefelsäure. Vorzugsweise werden die polierten Oberflächen mit Salpetersäure passiviert.

Im Rahmen der Erfindung wird die Retorte, welche zylinderförmig ist, aus Blechzuschnitten gefertigt, welche verschweißt werden. Vorzugsweise umfasst die Retorte konzentrisch einen Leitzylinder zur Aufnahme der Werkstücke während der Wärmebehandlung.

Die Erfindung schafft ferner eine Retorte für einen vorzugsweise evakuierbaren Nitrierofen, in dem metallische Werkstücke in einer vorbestimmten (stickstoffhaltigen) Atmosphäre wärmebehandelt werden, wobei die Retorte aus einem nichtrostenden Stahl bzw. Edelstahl gefertigt ist, dadurch gekennzeichnet, dass zumindest die im Betriebszustand des Nitrierofens mit der vorbestimmten Atmosphäre in Kontakt kommenden Oberflächen der Retorte mittels eines Beizmittels gebeizt sind.

Die Wärmebehandlung der Werkstücke findet in der Retorte statt. Bei den Oberflächen, die gebeizt sind, handelt es sich insbesondere um die Innenflächen der Retorte.

Bei einer bevorzugten Ausführungsform ist die Retorte aus verschweißten Blechzuschnitten hergestellt. Vorzugsweise ist die Retorte zylinderförmig. Vorzugsweise umfasst die Retorte konzentrisch einen Leitzylinder zur Aufnahme der Werkstücke während der Wärmebehandlung.

Vorzugsweise sind die gebeizten Oberflächen der Retorte elektropoliert. Dies sind insbesondere die Innenfläche der Retorte und die Oberflächen des Leitzylinders, die mit der Atmosphäre während der Wärmebehandlung in Kontakt kommen.

Vorzugsweise sind die polierten Oberflächen der Retorte mit Salpetersäure passiviert worden.

Die Erfindung umfasst schließlich einen Nitrierofen, in dem metallische Werkstücke in einer vorbestimmten Atmosphäre wärmebehandelt werden, dadurch gekennzeichnet, dass der Nitrierofen eine Retorte nach einem der Ansprüche 1 bis 12 umfasst. Nitrieröfen zum Durchführen von Nitrier- und Nitrocarburierprozessen weisen in der Regel evakuierbare Retorten auf, in denen die vorgenannten Prozesse stattfinden.

Die Erfindung wird im Folgenden anhand eines bevorzugten Ausführungsbeispiels näher erläutert.

Es wird eine Retorte für einen evakuierbaren Nitrierofen hergestellt. Zunächst werden aus gewalztem Edelstahlblech Blechzuschnitte erstellt, eine im Wesentlichen zylinderförmige Retorte geformt und die Blechzuschnitte verschweißt. Die Retorte umfasst einen an sich bekannten Leitzylinder aus Edelstahl. Der Leitzylinder dient zur Aufnahme bzw. zur Lagerung der Werkstücke während des Nitrierverfahrens.

Die Innenflächen der Retorte und der Leitzylinder werden gebeizt. Dazu wird ein Gemisch aus Salpetersäure und Flusssäure verwendet. Die mittels des Beizmittels behandelten Oberflächen weisen nur noch eine geringe katalytische Aktivität auf. Dadurch wird der Aufbau eines hohen Nitrierpotentials während des Nitrierens in der Retorte mit geringerer Ammoniakmenge möglich.

Die gebeizten Oberflächen werden im Anschluss an das Beizen in einem galvanischen Bad bestehend aus Phosphorsäure und Schwefelsäure elektropoliert. Im Anschluss werden die gebeizten Oberflächen mit Salpetersäure passiviert. Das Elektropolieren führt zu einer Verringerung der Oberflächenrauhigkeit, d. h. in Summe zu einer geringen Gesamtoberfläche. Damit wird die Adsorption von Ammoniak an der Oberfläche als Vorstufe zur Dissoziation verringert. Vorteilhaft ist auch der höhere Widerstand gegen Korrosion. Dadurch verlängert sich die Lebensdauer der Retorte wesentlich.

**Patentansprüche**

1. Verfahren zur Herstellung einer Retorte für einen Nitrierofen, in dem metallische Werkstücke in einer vorbestimmten Atmosphäre wärmebehandelt werden, wobei die Retorte aus einem nichtrostenden Stahl gefertigt ist,
**dadurch gekennzeichnet,**
**dass** zumindest die im Betriebszustand des Nitrierofens mit der vorbestimmten Atmosphäre in Kontakt kommenden Oberflächen der Retorte mittels eines Beizmittels gebeizt werden.

2. Verfahren nach Anspruch 1,
**dadurch gekennzeichnet, dass** das Beizmittel Salpetersäure und Flusssäure umfasst.

3. Verfahren nach Anspruch 1 oder 2,
**dadurch gekennzeichnet, dass** die Oberflächen nach dem Beizen mittels eines Elektrolyten in einem galvanischen Bad poliert werden.

4. Verfahren nach Anspruch 3,
**dadurch gekennzeichnet, dass** das Elektrolyt Phosphorsäure und Schwefelsäure umfasst.

5. Verfahren nach Anspruch 3 oder 4,
**dadurch gekennzeichnet, dass** die polierten Oberflächen mit Salpetersäure passiviert werden.

6. Verfahren nach einem der Ansprüche 1 bis 5,
**dadurch gekennzeichnet, dass** die Retorte zylinderförmig ist, dass die Retorte aus Blechzuschnitten gefertigt wird, welche verschweißt werden.

7. Retorte für einen Nitrierofen, in dem metallische Werkstücke in einer vorbestimmten Atmosphäre wärmebehandelt werden, wobei die Retorte aus einem nichtrostenden Stahl gefertigt ist,
**dadurch gekennzeichnet,**
**dass** zumindest die im Betriebszustand des Nitrierofens mit der vorbestimmten Atmosphäre in Kontakt kommenden Oberflächen der Retorte mittels eines Beizmittels gebeizt sind.

8. Retorte nach Anspruch 7,
**dadurch gekennzeichnet, dass** die Retorte aus verschweißten Blechzuschnitten hergestellt ist.

9. Retorte nach Anspruch 7 oder 8,
**dadurch gekennzeichnet, dass** die Retorte zylinderförmig ist.

10. Retorte nach einem der Ansprüche 7 bis 9,
**dadurch gekennzeichnet, dass** die Retorte konzentrisch einen Leitzylinder zur Aufnahme der Werkstücke während der Wärmebehandlung umfasst.

11. Retorte nach einem der Ansprüche 7 bis 10,
**dadurch gekennzeichnet, dass** die gebeizten Oberflächen der Retorte elektropoliert sind.

12. Retorte nach Anspruch 11,
**dadurch gekennzeichnet, dass** die gebeizten und elektropolierten Oberflächen der Retorte mit Salpetersäure passiviert worden sind.

13. Nitrierofen, in dem metallische Werkstücke in einer vorbestimmten Atmosphäre wärmebehandelt werden,
**dadurch gekennzeichnet, dass** der Nitrierofen eine Retorte nach einem der Ansprüche 1 bis 12 umfasst.

**Claims**

1. Method for producing a retort for a nitriding furnace, in which metallic workpieces are heat-treated in a predetermined atmosphere, wherein the retort is produced from a stainless steel,
**characterised in that** at least the surfaces of the retort which come into contact with the predetermined atmosphere in the operative state of the nitriding furnace are pickled by means of a pickling agent.

**2.** Method according to claim 1,
**characterised in that** the pickling agent comprises nitric acid and hydrofluoric acid.

**3.** Method according to claim 1 or 2,
**characterised in that**, after pickling, the surfaces are polished by means of an electrolyte in an electrolytic bath.

**4.** Method according to claim 3,
**characterised in that** the electrolyte comprises phosphoric acid and sulphuric acid.

**5.** Method according to claim 3 or 4,
**characterised in that** the polished surfaces are passivated with nitric acid.

**6.** Method according to any of claims 1 to 5,
**characterised in that** the retort is cylindrical, that the retort is produced from cut blanks which are welded.

**7.** Retort for a nitriding furnace, in which metallic workpieces are heat-treated in a predetermined atmosphere, wherein the retort is produced from a stainless steel,
**characterised in that** at least the surfaces of the retort which come into contact with the predetermined atmosphere in the operative state of the nitriding furnace are pickled by means of a pickling agent.

**8.** Retort according to claim 7,
**characterised in that** the retort is produced from welded cut blanks.

**9.** Retort according to claim 7 or 8,
**characterised in that** the retort is cylindrical.

**10.** Retort according to any of claims 7 to 9,
**characterised in that** the retort comprises concentrically a guide cylinder to accommodate the workpieces during the heat treatment.

**11.** Retort according to any of claims 7 to 10,
**characterised in that** the pickled surfaces of the retort are electropolished.

**12.** Retort according to claim 11,
**characterised in that** the pickled and electropolished surfaces of the retort have been passivated with nitric acid.

**13.** Nitriding furnace, in which metallic workpieces are heat-treated in a predetermined atmosphere,
**characterised in that** the nitriding furnace comprises a retort according to any of claims 1 to 12.

**Revendications**

**1.** Procédé de fabrication d'une cornue pour un four de nitruration, dans lequel des pièces métalliques sont soumises à un traitement thermique dans une atmosphère prédéterminée, dans lequel la cornue est fabriquée en un acier inoxydable,
**caractérisé en ce qu'**au moins les surfaces de la cornue qui viennent en contact avec l'atmosphère prédéterminée lors du fonctionnement du four de nitruration sont décapées au moyen d'un décapant.

**2.** Procédé selon la revendication 1,
**caractérisé en ce que** le décapant comprend de l'acide nitrique et de l'acide fluorhydrique.

**3.** Procédé selon la revendication 1 ou 2,
**caractérisé en ce que** les surfaces après le décapage sont polies au moyen d'un électrolyte dans un bain galvanique.

**4.** Procédé selon la revendication 3,
**caractérisé en ce que** l'électrolyte comprend de l'acide phosphorique et de l'acide sulfurique.

**5.** Procédé selon la revendication 3 ou 4,

**caractérisé en ce que** les surfaces polies sont passivées avec de l'acide nitrique.

6. Procédé selon l'une quelconque des revendications 1 à 5,
**caractérisé en ce que** la cornue a une forme cylindrique et **en ce que** la cornue est fabriquée à partir de pièces de tôle découpées qui sont soudées.

7. Cornue pour un four de nitruration, dans lequel des pièces métalliques sont soumises à un traitement thermique dans une atmosphère prédéterminée, dans lequel la cornue est fabriquée en un acier inoxydable,
**caractérisée en ce qu'**au moins les surfaces de la cornue qui viennent en contact avec l'atmosphère prédéterminée lors du fonctionnement du four de nitruration sont décapées au moyen d'un décapant.

8. Cornue selon la revendication 7,
**caractérisée en ce que** la cornue est fabriquée à partir de pièces de tôle découpées et soudées.

9. Cornue selon la revendication 7 ou 8,
**caractérisée en ce que** la cornue a une forme cylindrique.

10. Cornue selon l'une quelconque des revendications 7 à 9,
**caractérisée en ce que** la cornue comprend un cylindre de guidage concentrique destiné à recevoir les pièces pendant le traitement thermique.

11. Cornue selon l'une quelconque des revendications 7 à 10,
**caractérisée en ce que** les surfaces décapées de la cornue sont soumises à un polissage électrolytique.

12. Cornue selon la revendication 11,
**caractérisée en ce que** les surfaces décapées et polies par électrolyse de la cornue ont été passivées avec de l'acide nitrique.

13. Four de nitruration, dans lequel des pièces métalliques sont soumises à un traitement thermique dans une atmosphère prédéterminée,
**caractérisé en ce que** le four de nitruration comprend une cornue selon l'une quelconque des revendications 1 à 12.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 29615312 U1